# FASCICULE DE BREVET EUROPEEN

(11) **EP 1 347 871 B1**
(45) Date de publication et mention de la délivrance du brevet: **06.12.2006**
(21) Numéro de dépôt: 01998436.8
(22) Date de dépôt: 27.11.2001
(51) Int. Cl.: B29C 45/33, B29C 45/14, B60T 11/20

(54) **FABRICATION D'UN PISTON SECONDAIRE DE MAITRE-CYLINDRE**
HERSTELLUNG EINES SEKUNDÄRKOLBENS FÜR EINEN HAUPTZYLINDER
MANUFACTURE OF A MASTER CYLINDER SECONDARY PISTON

(30) Priorité: 30.11.2000 FR 0015636
(43) Date de publication de la demande: 01.10.2003
(73) Titulaire: ROBERT BOSCH GMBH, 70442 Stuttgart (DE)
(72) Inventeur: PAGOT, Henri, F-93430 VILLETANEUSE (FR); VITRY, Jean-Jacques, F-94170 LE PERREUX SUR MARNE (FR)
(74) Mandataire: Hurwic, Aleksander Wiktor
(86) Numéro de dépôt international: PCT/FR2001/003737
(87) Numéro de publication internationale: WO 2002/043941

(56) Documents cités:
- FR-A- 2 622 163
- GB-A- 2 216 629
- US-A- 5 279 125
- PATENT ABSTRACTS OF JAPAN vol. 1995, no. 11, 26 décembre 1995 (1995-12-26) -& JP 07 205793 A (AISIN SEIKI CO LTD), 8 août 1995 (1995-08-08)
- PATENT ABSTRACTS OF JAPAN vol. 17, no. 336 (M-1435), 25 juin 1993 (1993-06-25) -& JP 05 042566 A (RHYTHM CORP), 23 février 1993 (1993-02-23)
- PATENT ABSTRACTS OF JAPAN vol. 1996, no. 11, 29 novembre 1996 (1996-11-29) -& JP 08 183062 A (NABCO LTD), 16 juillet 1996 (1996-07-16)

## Description

L'invention concerne un procédé de fabrication d'un piston secondaire d'un maître-cylindre d'un circuit de freinage pour véhicule automobile, ainsi que le piston fabriqué conformément à ce procédé.

Dans la technique actuelle, le piston secondaire qui est monté dans un maître-cylindre pour l'alimentation d'un circuit secondaire de freinage en liquide hydraulique sous pression, porte à ses extrémités des joints d'étanchéité montés dans des gorges annulaires de sa surface extérieure et des butées de ressort, et comprend dans sa partie médiane une lumière allongée traversante dans laquelle est montée une goupille transversale fixée dans le maître-cylindre. Cette goupille sert à la fois de butée limitant la course du piston secondaire dans le maître-cylindre et d'appui de la tige d'un clapet monté dans un passage axial du piston secondaire pour commander l'alimentation du circuit secondaire de freinage en fonction de la position du piston secondaire dans le maître-cylindre. Ce piston secondaire est réalisé habituellement en métal, par exemple en aluminium ou en alliage léger, et subit un usinage relativement complexe comprenant la formation par décolletage de gorges annulaires de réception des joints d'étanchéité, de sorte que sa réalisation est longue et coûteuse. Un piston avec cette forme es+t connu de US-A-5279125. Le document ne décrit pas le materiau constituant le piston. Il est aussi connu de produire un piston par moulage d'un verin, voir p. ex. GB-A-2216629.

L'invention a notamment pour but de réduire le coût d'un tel piston, en supprimant son usinage ou au moins en le réduisant à un minimum.

Elle propose à cet effet un procédé de fabrication d'un piston secondaire d'un maître-cylindre d'un circuit de freinage pour véhicule automobile, ce piston comprenant des parties cylindriques d'extrémité destinées à recevoir des joints d'étanchéité et des butées de ressort, une partie intermédiaire cylindrique formée avec une lumière allongée axialement et traversant diamétralement le piston, et des rebords annulaires orientés radialement vers l'extérieur et formés sur le piston entre ses parties d'extrémité et sa partie intermédiaire, caractérisé en ce qu'il consiste à fabriquer le piston par moulage dans un moule comprenant deux parties d'extrémité dont chacune comporte une cavité cylindrique de moulage à la forme d'une partie cylindrique d'extrémité du piston et d'un rebord annulaire correspondant, et des parties de moule intermédiaires qui délimitent entre elles une cavité de moulage à la forme de la partie intermédiaire du piston et de sa lumière allongée.

Grâce à ce procédé, les opérations d'usinage des extrémités cylindriques du piston ne sont plus nécessaires, ces extrémités étant obtenues directement de moulage, sans bavures et sans traces de plan de joint, dans des parties de moule ayant des cavités cylindriques de moulage correspondant aux formes définitives des parties d'extrémité du piston. La lumière de la partie intermédiaire du piston est également obtenue directement de moulage, sans usinage.

Corollairement, ce procédé consiste également à démouler le piston par déplacement axial vers l'extérieur des parties d'extrémité du moule et par déplacement radial vers l'extérieur d'une ou des parties intermédiaires du moule.

On peut monter les joints d'étanchéité par translation axiale en les faisant glisser sur les extrémités cylindriques ainsi obtenues du piston secondaire, jusqu'à les amener en appui sur les rebords annulaires précités.

Selon d'autres caractéristiques de l'invention, ce procédé consiste également à former de moulage une extrémité du piston avec une tige axiale s'étendant à l'opposé du piston, ou à surmouler le piston à cette extrémité sur un insert en forme de tige s'étendant axialement à l'opposé du piston.

Cette tige est destinée à porter une autre butée de ressort, pour le montage d'un ressort entre le piston secondaire et un piston primaire du maître-cylindre.

L'invention propose également un piston secondaire de maître-cylindre, obtenu par exécution du procédé décrit ci-dessus, caractérisé en ce que ses parties cylindriques d'extrémité sont dépourvues de bavures et de traces de plan de joint.

Un tel piston est utilisable directement, sans usinage de ses parties cylindriques d'extrémité.

Avantageusement, ce piston est en une matière plastique renforcée de fibres et est ainsi plus léger et moins coûteux que dans la technique antérieure.

Selon une autre caractéristique de l'invention, les joints d'étanchéité en appui sur les rebords annulaires du piston sont calés axialement par des rondelles enfilées sur les parties cylindriques d'extrémité du piston et/ou par des butées de ressort.

Dans un mode de réalisation préféré de l'invention, une partie cylindrique d'extrémité du piston comprend sur sa surface extérieure des nervures en saillie pour le maintien d'une butée de ressort en forme de cage cylindrique qui est enfilée sur cette partie d'extrémité.

Avantageusement, cette cage cylindrique comprend un bourrelet annulaire en saillie radialement vers l'extérieur et formant un moyen de retenue d'une spire d'un ressort hélicoïdal enfilé sur cette cage. Cette caractéristique facilite l'assemblage dans le maître-cylindre. A son extrémité opposée au joint d'étanchéité, cette cage comprend également un rebord annulaire orienté radialement vers l'intérieur et formant un siège d'un ressort de rappel d'un clapet monté dans un passage axial du piston.

Ce passage axial est obtenu directement de moulage sans bavures et ne nécessite aucun usinage.

L'invention sera mieux comprise et d'autres caractéristiques, détails et avantages de celle-ci apparaîtront plus clairement à la lecture de la description qui suit, faite à titre d'exemple en référence aux dessins annexés, dans lesquels :
- la figure 1 est une vue schématique en coupe axiale d'un maître-cylindre de la technique antérieure ;
- les figures 2 et 3 sont des vues de dessus et en coupe axiale, respectivement, d'un piston secondaire selon l'invention ;
- la figure 4 représente le piston secondaire de la figure 3, équipé de joints d'étanchéité et de butées de ressort ;
- la figure 5 est une vue correspondant à la figure 4, pour une variante de réalisation ;
- la figure 6 est une vue en coupe de l'extrémité avant du piston de la figure 5 ;
- la figure 6a est une vue schématique en coupe d'une variante de réalisation ;
- les figures 7, 8 et 9 sont des vues correspondant à la figure 4 et représentent d'autres variantes de réalisation selon l'invention ;
- la figure 9a est une vue schématique partielle agrandie d'une variante de réalisation ;
- la figure 10 est une vue de face d'une butée de ressort équipant les pistons secondaires des figures 7, 8 et 9 ;
- la figure 11 est une vue correspondant à la figure 4 et représente une autre variante de réalisation de l'invention.

Par convention, dans les dessins et dans la description, l'avant correspond à ce qui est à gauche et l'arrière à ce qui est à droite.

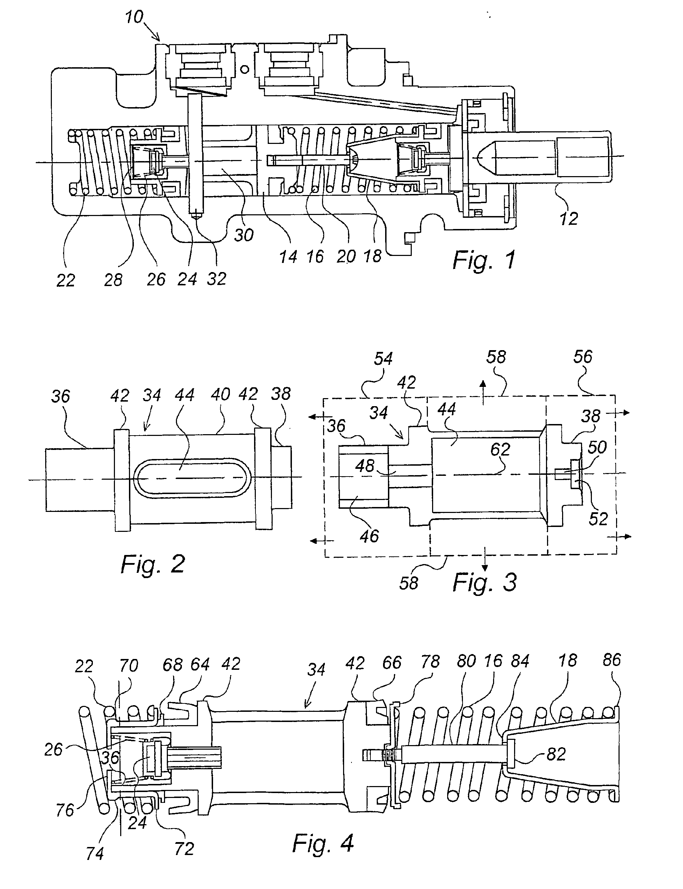

On se réfère d'abord à la figure 1, qui représente en coupe axiale un maître-cylindre 10 de la technique antérieure, comprenant un piston primaire 12 déplaçable vers l'avant par une pédale de frein associée à un servomoteur d'assistance au freinage (non représenté) pour l'alimentation en liquide hydraulique sous pression d'un circuit primaire de freinage, et un piston secondaire 14, déplaçable vers l'avant par le piston primaire 12 pour l'alimentation en liquide hydraulique sous pression d'un circuit secondaire de freinage.

Un ressort hélicoïdal 16 s'étend axialement entre un rebord annulaire du piston secondaire 14 et une butée de ressort 18 appliquée sur un rebord annulaire du piston primaire 12 et tenue par une vis axiale 20 dont l'extrémité avant est vissée dans un orifice axial de la partie arrière du piston secondaire 14.

A son extrémité avant, le piston secondaire est associé à un ressort de rappel 22 monté axialement entre un rebord annulaire de l'extrémité avant du piston secondaire 14 et une paroi transversale avant du maître-cylindre 10.

Les parties avant et arrière du piston secondaire 14 sont équipées de joints d'étanchéité à section en U, qui sont montés dans des gorges annulaires de la surface extérieure du piston 14 et qui coopèrent à étanchéité avec la paroi cylindrique interne du maître-cylindre 10. La partie avant du piston secondaire 14 est tubulaire et reçoit un clapet 24 d'obturation d'un passage axial du piston 14, ce clapet 24 étant associé à un ressort de rappel 26 dont l'extrémité avant est en appui sur un anneau 28 fixé par encliquetage élastique à l'intérieur de la partie avant du piston 14.

La partie intermédiaire de ce piston comporte une lumière allongée 30 qui traverse diamétralement le piston dans le plan du dessin et dans laquelle s'étend une goupille 32 fixée dans le corps du maître-cylindre. Cette goupille 32 limite le déplacement axial du piston secondaire 14 à l'intérieur du maître-cylindre et forme un appui pour la tige axiale du clapet 24, qui est maintenu en position d'ouverture du passage axial formé dans le piston secondaire 14 dans la position représentée en figure 1 et qui obture ce passage axial quand le piston secondaire 14 est déplacé vers l'avant.

Selon l'invention, le piston secondaire 14 est réalisé par moulage, avantageusement en une matière plastique telle notamment qu'un polyamide renforcé de fibres de verre ou une matière plastique thermodurcissable.

Le piston secondaire 34 selon l'invention, dont un premier mode de réalisation est représenté aux figures 2 et 3, comprend des parties avant 36 et arrière 38 de forme cylindrique à section circulaire constante, qui sont raccordées à une partie médiane 40 par des rebords annulaires 42 s'étendant radialement vers l'extérieur et ayant un diamètre extérieur supérieur à ceux des parties 36 et 38 et de la partie intermédiaire 40. Celle-ci est formée, de moulage, avec une lumière axialement allongée 44 qui traverse diamétralement la partie intermédiaire 40 et qui s'étend sur presque toute la longueur axiale de celle-ci.

La partie avant 36 du piston secondaire est tubulaire et délimite une chambre 46 qui débouche à l'extrémité avant du piston et qui communique par un passage axial 48 avec la lumière allongée 44 de la partie intermédiaire.

La partie arrière 38 du piston comprend un passage axial borgne 50 qui débouche vers l'arrière dans un chambrage 52 de diamètre plus important.

Le piston des figures 2 et 3 est fabriqué par injection de matière plastique dans un moule représenté en tirets autour du piston de la figure 3 et qui comprend une partie avant 54 de forme cylindrique, une partie arrière 56 de forme cylindrique également, et deux parties intermédiaires 58 semi-cylindriques qui sont radialement juxtaposées.

Chaque partie d'extrémité 54, 56 est d'une pièce et comporte une cavité de moulage de forme cylindrique, correspondant à la partie d'extrémité 36, 38 respectivement du piston secondaire. Les parties intermédiaires 58 comportent chacune une cavité de moulage dont la forme correspond à la moitié de la partie intermédiaire 40 du piston secondaire et de sa lumière allongée 44.

Dans la position de moulage, les deux parties d'extrémité 54, 56 du moule et les parties intermédiaires 58 sont dans la position représentée en figure 3, les parties intermédiaires 58 étant en appui l'une sur l'autre selon un plan de joint qui passe par l'axe 62 du piston et qui est perpendiculaire au plan du dessin en figure 3.

Le démoulage du piston secondaire 34 est effectué par déplacement axial des parties d'extrémité 54 et 56 dans le sens indiqué par les flèches en figure 3, puis par déplacement radial d'au moins une des parties intermédiaires 58, comme indiqué par les flèches.

On obtient ainsi un piston moulé dont les parties d'extrémité 36 et 38 sont formées de moulage avec les chambres 46, 52 et les passages axiaux 48, 50 précités, les surfaces externes des parties d'extrémité 36, 38 et des rebords annulaires 42 étant dépourvues de bavures et de traces de plan de joint.

La partie intermédiaire 40 du piston est susceptible de présenter des traces de plan de joint correspondant à la jonction des parties intermédiaires 58 du moule, mais ces traces peuvent être facilement enlevées par un usinage léger, notamment lorsque la partie intermédiaire 40 du piston a un diamètre extérieur inférieur à celui des rebords annulaires 42.

Le coût du piston secondaire selon l'invention est donc nettement inférieur à celui d'un piston métallique usiné de la technique antérieure.

Avant son montage dans le maître-cylindre 10, le piston 34 des figures 2 et 3 est équipé de joints d'étanchéité 64 à sa partie avant et 66 à sa partie arrière, que l'on fait glisser sur les parties cylindriques d'extrémité 36, 38 pour les amener en butée sur les rebords annulaires 42. Ensuite, une rondelle annulaire 68 de calage axial du joint avant 64 est enfilée sur la partie cylindrique d'extrémité 36 du piston, puis une butée de ressort 70 formée d'une cage cylindrique est enfilée sur cette partie d'extrémité. Cette butée 70 comprend un rebord arrière 72 orienté radialement vers l'extérieur, sur lequel s'appuie l'extrémité arrière du ressort de rappel 22 du piston secondaire. Un bourrelet annulaire 74 formé en saillie radialement vers l'extérieur à l'extrémité avant de la butée 70 permet de retenir sur cette butée la dernière spire à l'extrémité arrière du ressort 22. De plus, l'extrémité avant de la butée 70 comporte un rebord annulaire 76 s'étendant radialement vers l'intérieur et qui s'appuie sur l'extrémité avant du piston. Le rebord 76 forme le siège d'appui du ressort 26 du clapet 24 monté à l'intérieur de la chambre avant 46 du piston secondaire pour l'obturation du passage axial 48.

Quand le piston secondaire 34 est monté dans le maître-cylindre 10, le ressort de rappel 22 maintient le joint d'étanchéité 64 appliqué sur le rebord annulaire 42 par l'intermédiaire de la butée 70 et de la rondelle annulaire 68. La configuration de la partie avant du piston 34 lui confère une résistance optimale en cas de choc sur la paroi transversale avant du maître-cylindre.

A l'extrémité arrière du piston, le joint d'étanchéité 66 est maintenu appliqué sur le rebord annulaire 42 par un disque 78 ayant un diamètre extérieur légèrement inférieur à celui du joint d'étanchéité 66 et du rebord annulaire 42 et qui est fixé par déformation, par exemple par sertissage sur la partie avant d'une tige 80 dont l'extrémité avant est engagée dans le passage axial borgne 50 de la partie arrière du piston 34.

Le disque 78 comporte un orifice central dont les bords sont pliés à angle droit vers l'avant pour le sertissage du disque 78 sur la partie avant de la tige 80. Ces bords pliés vers l'avant de l'orifice central du disque 78 sont logés dans le chambrage 52 de la face d'extrémité arrière du piston 34.

L'extrémité arrière de la tige 80 comporte une tête 82 de retenue axiale d'une butée de ressort 18 semblable à celle représentée en figure 1, cette butée 18 étant de forme tronconique allant en s'élargissant vers l'arrière et étant montée coulissante sur la tige 80 par son extrémité avant 84. A son extrémité arrière, la butée 18 comporte un rebord annulaire 86 orienté radialement vers l'extérieur et sur lequel s'appuie l'extrémité arrière du ressort de rappel 16 du piston primaire.

On remarquera que, dans le mode de réalisation préféré de l'invention qui est représenté aux figures 2 à 4, aucun élément n'est vissé ou monté à force ou à frottement sur ou dans le piston secondaire 34, ce qui élimine les risques de formation de particules ou de copeaux de matière qui pourraient être la cause de rayures de la surface cylindrique interne du maître-cylindre 10 et de défauts d'étanchéité.

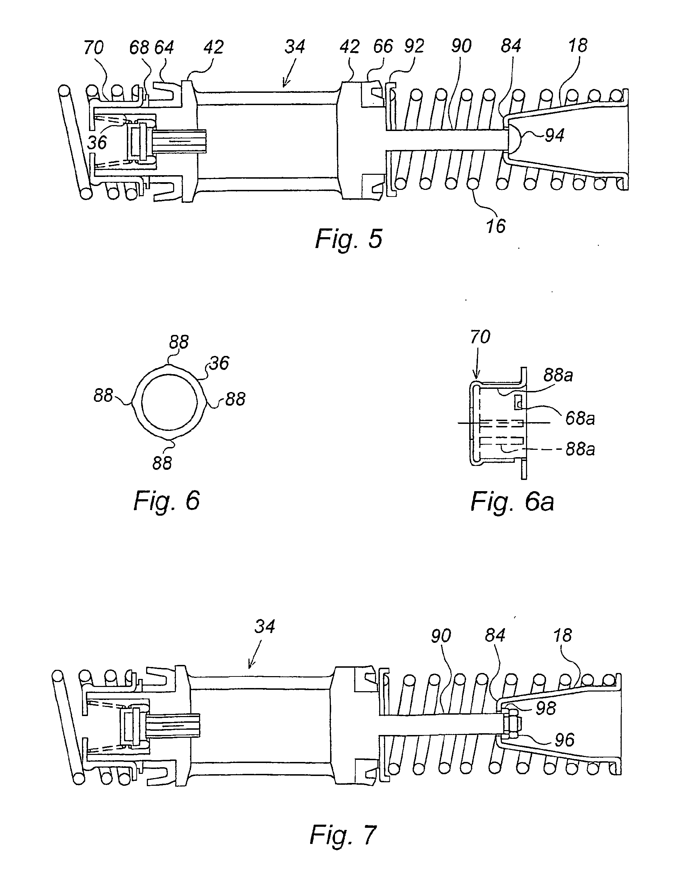

Dans la variante de réalisation des figures 5 et 6, la partie cylindrique avant 36 du piston secondaire 34 comporte des nervures 88 en saillie sur sa surface externe, qui s'étendent parallèlement à l'axe et qui ont une faible hauteur radiale, suffisante pour retenir la butée de ressort 70 quand elle est enfilée sur la partie cylindrique 36 du piston 34.

En variante et comme représenté en figure 6a, la rondelle 68 peut être remplacée par des crevés radiaux 68a de la butée 70, formés dans le prolongement du rebord 72 et qui servent d'appui à la lèvre intérieure du joint 64.

De plus, des nervures 88a peuvent être formées sur la face interne de la partie cylindrique de la butée 70, et non sur la partie avant 36 du piston, ce qui permet de démouler axialement toute cette partie avant, de son extrémité au rebord annulaire 92.

Pour le reste, la structure de la partie avant du piston 34 et les éléments qui lui sont associés sont identiques à ceux déjà décrits en référence aux figures 2 à 4.

La partie arrière 38 du piston 34 est formée de moulage avec une tige cylindrique axiale 90 qui s'étend vers l'arrière et qui remplace la tige axiale 80 précédemment décrite. Sur cette tige 90 est enfilée une rondelle 92 qui forme la butée avant du ressort 16, la butée arrière 18 de ce ressort est enfilée par son extrémité avant sur la tige 90, après quoi l'extrémité arrière de cette tige est déformée par exemple par bouterollage, pour former une tête 94 de retenue axiale de la butée 18.

Dans cette variante de réalisation, le joint d'étanchéité arrière 66 est maintenu sur le rebord annulaire 42 par la rondelle 92, qui est elle-même appliquée sur une face radiale droite d'extrémité arrière du piston 34 par le ressort 16.

La variante de réalisation de la figure 7 ne diffère de celle des figures 5 et 6 que par les moyens de retenue axiale de la cage 18 à l'extrémité arrière de la tige 90 formée de moulage avec le piston 34. En figure 7, l'extrémité arrière de la tige 90 est filetée et reçoit un écrou 96 et une rondelle d'arrêt. 98 sur laquelle prend appui l'extrémité avant 84 de la butée 18.

Pour le reste, le piston 34 est identique à celui des figures 5 et 6.

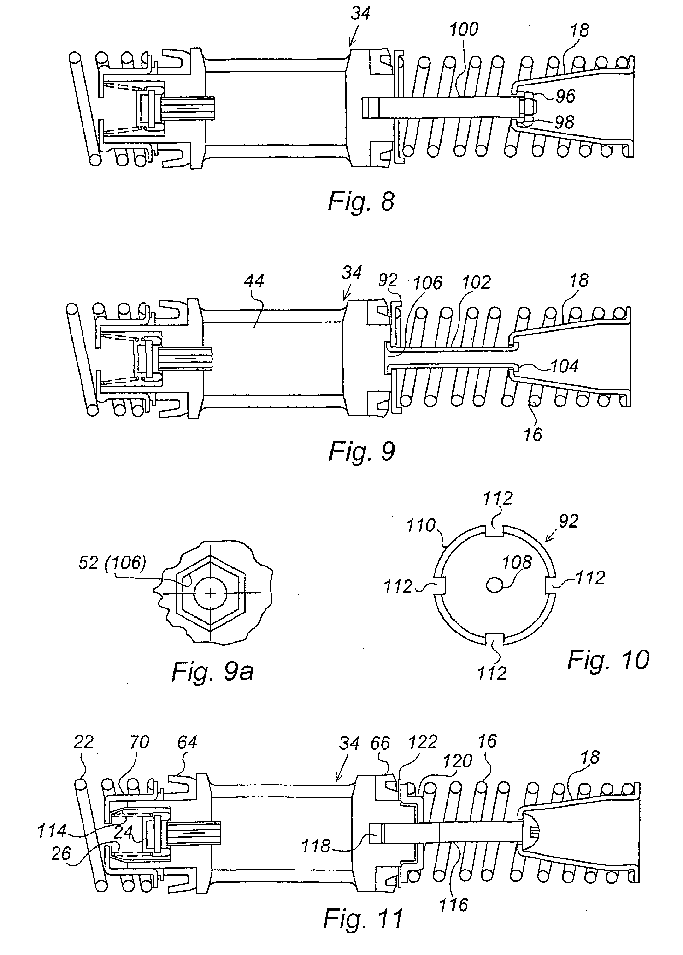

La variante de réalisation représentée en figure 8 diffère de celles déjà décrites en ce que la tige axiale 90 venant de moulage avec le piston 34 dans les réalisations des figures 5 et 7 est remplacée par une tige métallique 100, montée en insert dans le moule de fabrication du piston 34, de sorte que la partie arrière du piston est surmoulée sur l'extrémité avant de la tige 100.

L'extrémité arrière de cette tige est filetée et reçoit un écrou 96 et une rondelle d'arrêt 98 pour la retenue axiale de la butée de ressort 18, comme dans le mode de réalisation de la figure 7.

Pour le reste, la structure du piston 34 est identique à celle déjà décrite.

Dans la variante de réalisation de la figure 9, la tige axiale arrière 80, 90 ou 100 des modes de réalisation précédemment décrits est remplacée par une tige tubulaire 102 dont les extrémités, après mise en place des butées de ressort 92 et 18, sont déformées par expansion radiale comme représenté en 104 pour constituer des moyens de retenue axiale des butées 92 et 18. L'extrémité avant ainsi déformée de la tige tubulaire 102 est logée dans un chambrage axial cylindrique 106 de la face arrière du piston 34.

La butée 92 représentée en vue de face en figure 10 est essentiellement constituée d'une rondelle annulaire, comme déjà décrit, comportant un orifice central 108 de passage de la tige axiale 102 et un rebord périphérique annulaire 110 s'étendant parallèlement à l'axe vers l'arrière et formant un moyen de retenue radiale de la dernière spire du ressort 16. Des échancrures 112 sont formées dans ce rebord et dans la périphérie de la rondelle 92, par exemple à 90 degrés les unes des autres comme représenté en figure 10, pour faciliter la purge d'air et l'égalisation des pressions de part et d'autre de cette rondelle.

Dans la variante de réalisation de la figure 11, la butée de ressort 70 à l'avant du piston 34 n'est pas en appui axial sur l'extrémité avant de ce piston mais sur une cage cylindrique 114 montée à l'intérieur de la chambre avant 46 du piston, en appui sur le fond de cette chambre. Un rebord d'extrémité avant de la cage 114 forme un appui du ressort 26 de rappel du clapet 24 et définit également la position axiale de la cage 70 sur la partie avant du piston 34.

A l'arrière du piston, la tige axiale 116 qui supporte la butée de ressort 18 est une tige filetée vissée dans un passage axial borgne 118 de la partie d'extrémité arrière du piston. La tige filetée 116 traverse une cage 120 en forme de cuvette, appliquée sur l'extrémité arrière du piston 34 et la recouvrant partiellement, cette cage 120 servant de butée au ressort 16 du piston primaire. Une rondelle annulaire 122 de calage axial du joint d'étanchéité arrière 66 est interposée entre la lèvre interne de ce joint et le bord périphérique extérieur de la cage 120.

Dans les modes de réalisation des figures 4 et 9, le piston secondaire 34 d'une part et la tige 80, 102 avec les butées 78, 92 et 18 d'autre part, forment deux sous-ensembles unitaires qui sont indépendants l'un de l'autre avant montage dans le maître-cylindre et qui ne sont associés l'un à l'autre qu'à l'intérieur du maître-cylindre quand le piston secondaire est poussé par son ressort de rappel 22 sur la butée 78, 92 du ressort 16 du piston primaire. Les réglages de longueur unitaire qui ont pour but de réduire la course morte du circuit secondaire (distance en figure 1 entre la tête du clapet 24 et son siège sur le piston secondaire) pour réduire la course morte à la pédale et améliorer le confort de freinage, sont effectués pour ces modes de réalisation sur le sous-ensemble unitaire formé par la tige 80, 102 et les butées 78, 92 et 18 et consistent à ajuster la distance entre la butée 78, 92 et l'extrémité arrière de la butée 18 dans les positions de repos représentées aux figures 4 et 9.

Comme représenté schématiquement en figure 9a, il est avantageux que le chambrage 52 de la partie arrière du piston 34 de la figure 4, ou le passage 50 de ce piston, ou le chambrage 106 du piston 34 de la figure 9 ait un contour non circulaire, par exemple hexagonal, pour le réglage de la position angulaire du piston 34 dans le maître-cylindre au moyen d'une clé à six pans ou analogue, pour la mise en place de la goupille 32 dans la lumière 44.

Dans les modes de réalisation des figures 5, 7, 8 et 11 où le piston secondaire 34 et la tige 90, 100, 116 portant les butées 92, 120, 18 et le ressort 16 forment un ensemble unitaire, les réglages de longueur précités sont effectués par ajustement de la distance entre le siège du clapet 24 et l'extrémité arrière de la butée 18 dans les positions représentées.

## Revendications

1. Procédé de fabrication d'un piston secondaire d'un maître-cylindre d'un circuit de freinage pour véhicule automobile, ce piston (34) comprenant des parties cylindriques d'extrémité (36, 38) destinées à recevoir des joints d'étanchéité (64, 66) et des butées de ressort (70, 78, 92), une partie intermédiaire (40) cylindrique formée avec une lumière (44) allongée axialement et traversant diamétralement le piston, et des rebords annulaires (42) orientés radialement vers l'extérieur et formés sur le piston entre ses parties d'extrémité et sa partie intermédiaire, **caractérisé en ce qu'**il consiste à fabriquer le piston par moulage d'une matière plastique dans un moule comprenant deux parties d'extrémité (54, 56) dont chacune comporte une cavité cylindrique de moulage à la forme d'une partie cylindrique d'extrémité (36, 38) du piston et d'un rebord annulaire (42) correspondant, et des parties de moule intermédiaires (58) qui délimitent entre elles une cavité de moulage à la forme de la partie intermédiaire (40) du piston et de sa lumière allongée (44).

2. Procédé selon la revendication 1, **caractérisé en qu'**il consiste à mouler le piston (34) par injection de matière plastique dans le moule précité.

3. Procédé selon la revendication 1 ou 2, **caractérisé en qu'**il consiste à démouler le piston (34) par déplacement axial vers l'extérieur des parties d'extrémité (54, 56) du moule et par déplacement radial vers l'extérieur d'une ou des parties intermédiaires (58) du moule.

4. Procédé selon l'une des revendications précédentes, **caractérisé en qu'**il consiste à monter les joints d'étanchéité (64, 66) sur le piston par glissement de ces joints chacun sur une partie cylindrique d'extrémité (36, 38) du piston pour les amener en appui sur les rebords annulaires (42) précités.

5. Procédé selon l'une des revendications précédentes, **caractérisé en qu'**il consiste à former de moulage une extrémité (38) du piston avec une tige axiale (90) s'étendant à l'opposé du piston.

6. Procédé selon l'une des revendications 1 à 4, **caractérisé en qu'**il consiste à surmouler une extrémité (38) du piston sur un insert en forme de tige (100) s'étendant axialement à l'opposé du piston.

7. Piston secondaire de maître-cylindre, fabriqué en plastique par exécution du procédé selon l'une des revendications précédentes, **caractérisé en que** les parties cylindriques d'extrémité (36, 38) duquel sont dépourvues de bavures et de traces de plan de joint.

8. Piston selon la revendication 7, **caractérisé en ce qu'**il est en une matière plastique renforcée de fibres.

9. Piston selon la revendication 7 ou 8, **caractérisé en ce que** les joints d'étanchéité (64, 66) en appui sur les rebords annulaires (42) sont calés axialement par des rondelles (68, 122) enfilées sur les parties cylindriques d'extrémité du piston et/ou par des butées de ressort (70, 78, 92, 120).

10. Piston selon la revendication 9, **caractérisé en ce qu'**une butée de ressort (70) en forme de cage cylindrique est enfilée sur une partie d'extrémité (36) du piston et maintenue par des nervures (88, 88a) formées sur le piston ou sur la cage cylindrique.

11. Piston selon la revendication 10, **caractérisé en ce que** lesdites nervures (88, 88a) sont sensiblement parallèles à l'axe (62) du piston.

12. Piston selon la revendication 10 ou 11, **caractérisé en ce que** ladite cage cylindrique (70) comprend un bourrelet annulaire (74) en saillie radialement vers l'extérieur et formant un moyen de retenue d'une spire d'un ressort hélicoïdal (22) enfilé sur cette cage.

13. Piston selon l'une des revendications 10 à 12, **caractérisé en ce que** ladite cage (70) comprend à son extrémité opposée au joint d'étanchéité (64) un rebord annulaire (76) orienté radialement vers l'intérieur et formant un siège d'un ressort de rappel (26) d'un clapet (24) monté dans un passage axial (48) du piston.

14. Piston selon l'une des revendications 7 à 13, **caractérisé en ce que** le joint d'étanchéité monté sur une autre partie cylindrique d'extrémité (38) du piston est calé axialement par une première butée de ressort (78, 92, 122) de forme annulaire, appliquée sur la face radiale d'extrémité du piston et traversée par une tige axiale (80, 100, 102, 116) dont l'extrémité opposée au piston porte une deuxième butée de ressort (18) montée axialement coulissante sur ladite tige.

15. Piston selon la revendication 14, **caractérisé en ce que** ladite tige (90, 100) est solidaire du piston (34) par moulage ou surmoulage, et son extrémité opposée au piston comporte des moyens (94, 96, 98) d'arrêt de ladite seconde butée de ressort (18), ces moyens d'arrêt comprenant par exemple une déformation radiale (94) de l'extrémité de la tige ou un écrou ou analogue vissé sur cette extrémité.

16. Piston selon la revendication 14, **caractérisé en ce que** ladite tige (116) est vissée dans un orifice axial (118) de l'extrémité correspondante du piston.

17. Piston selon la revendication 15 ou 16, **caractérisé en ce qu'**il forme un ensemble unitaire avec la tige axiale (90, 100, 116) portant les première et deuxième butées de ressort (42, 120, 18).

18. Piston selon la revendication 14, **caractérisé en ce que** ladite première butée de ressort (78) est fixée par déformation, par exemple par sertissage, sur la tige axiale (80) précitée dont l'extrémité côté piston est guidée dans un orifice axial (50) de l'extrémité correspondante du piston.

19. Piston selon la revendication 14 ou 18, **caractérisé en ce que** ce piston (34) et la tige axiale (80, 102) portant les butées de ressort (78, 92, 18) constituent des sous-ensembles unitaires indépendants qui sont associés l'un à l'autre par butée axiale à l'intérieur du maître-cylindre.

20. Piston selon la revendication 19, **caractérisé en ce que** la course morte du clapet (24) du piston secondaire (34) est déterminée par la distance entre les butées de ressort (78, 92, 18) portées par la tige axiale (80, 102) dans leur position de repos.

21. Piston selon la revendication 19 ou 20, **caractérisé en ce que** les première et seconde butées de ressort (92, 18) sont retenues axialement sur la tige axiale (102) précitée par des déformations des extrémités de cette tige.

22. Piston selon l'une des revendications 19 à 21, **caractérisé en ce que** sa partie arrière (38) comporte un chambrage (52, 106) ou un passage axial borgne (50) à section non circulaire, pour le réglage de la position angulaire du piston dans le maître-cylindre.

## Claims

1. Method for manufacturing a secondary piston of a master cylinder of a braking circuit for a motor vehicle, this piston (34) comprising cylindrical end parts (36, 38) intended to take seals (64, 66) and spring stops (70, 78, 92), a cylindrical intermediate part (40) formed with an axially elongate slot (44) passing diametrically through the piston, and annular rims (42) oriented radially outward and formed on the piston between its end parts and its intermediate part, **characterized in that** it consists in manufacturing the piston by molding of a plastic material in a mold comprising two end parts (54, 56), each of which has a cylindrical molding cavity in the shape of a cylindrical end part (36, 38) of the piston and of a corresponding annular rim (42), and intermediate mold parts (58) which between them delimit a molding cavity in the shape of the intermediate part (40) of the piston and of its elongate slot (44).

2. Method according to claim 1, **characterized in that** it consists in molding the piston (34) by injecting plastic into the aforementioned mold.

3. Method according to claim 1 or 2, **characterized in that** it consists in releasing the piston (34) from the mold by moving the end parts (54, 56) of the mold axially outward and by moving one or both of the intermediate parts (58) of the mold radially outward.

4. Method according to one of the preceding claims, **characterized in that** it consists in mounting the seals (64, 66) on the piston by sliding each of these seals along a cylindrical end part (36, 38) of the piston to bring them up to bear against the aforementioned annular rims (42).

5. Method according to one of the preceding claims, **characterized in that** it consists in shaping, by molding, one end (38) of the piston with an axial rod (90) extending away from the piston.

6. Method according to one of claims 1 to 4, **characterized in that** it consists in overmolding one end (38) of the piston onto an insert in the form of a rod (100) extending axially away from the piston.

7. Master cylinder secondary piston manufactured out of a plastic material by performing the method according to one of the preceding claims, **characterized in that** the cylindrical end parts of which (36, 38) have no flash or traces of parting line.

8. Piston according to claim 7, **characterized in that** it is made of a fiber-reinforced plastic.

9. Piston according to claim 7 or 8, **characterized in that** the seals (64, 66) bearing against the annular rims (42) are held axially in position by washers (68, 122) slipped over the cylindrical end parts of the piston and/or by spring stops (70, 78, 92, 120).

10. Piston according to claim 9, **characterized in that** a spring stop (70) in the form of a cylindrical cage is slipped over an end part (36) of the piston and held in place by ribs (88, 88a) formed on the piston or on the cylindrical cage.

11. Piston according to claim 10, **characterized in that** said ribs (88, 88a) are more or less parallel to the axis (62) of the piston.

12. Piston according to claim 10 or 11, **characterized in that** said cylindrical cage (70) has an annular bulge (74) projecting radially outward and forming a means of retaining a turn of a helical spring (22) slipped over this cage.

13. Piston according to one of claims 10 to 12, **characterized in that**, at its opposite end to the seal (64), said cage (70) has an annular rim (76) oriented radially inward and forming a seat for a return spring (26) of a valve (24) mounted in an axial passage (48) of the piston.

14. Piston according to one of claims 7 to 13, **characterized in that** the seal mounted on another cylindrical end part (38) of the piston is held axially in place by a first spring stop (78, 92, 122) of annular shape, pressed against the radial end face of the piston and through which there passes an axial rod (80, 100, 102, 116), of which the end away from the piston carries a second spring stop (18) mounted to slide axially along said rod.

15. Piston according to claim 14, **characterized in that** the said rod (90, 100) is integral with the piston (34) through molding or overmolding, and its end away from the piston has means (94, 96, 98) for locking the said second spring stop (18), these locking means comprising for example a radial deformation (94) of the end of the rod or a nut or the like screwed onto this end.

16. Piston according to claim 14, **characterized in that** said rod (116) is screwed into an axial orifice (118) in the corresponding end of the piston.

17. Piston according to claim 15 or 16, **characterized in that** it forms a unit assembly with the axial rod (90, 100, 116) carrying the first and second spring stops (42, 120, 18).

18. Piston according to claim 14, **characterized in that** said first spring stop (78) is fixed by deformation, for example by clinching, onto the aforementioned axial rod (80) the piston end of which is guided in an axial orifice (50) in the corresponding end of the piston.

19. Piston according to claim 14 or 18, **characterized in that** this piston (34) and the axial rod (80, 102) carrying the spring stops (78, 92, 18) constitute independent unit subassemblies which are associated with one another by axial abutment within the master cylinder.

20. Piston according to claim 19, **characterized in that** the dead travel of the valve (24) of the secondary piston (34) is determined by the distance between the spring stops (78, 92, 18) carried by the axial rod (80, 102) in their position of rest.

21. Piston according to claim 19 or 20, **characterized in that** the first and second spring stops (92, 18) are held axially on the aforementioned axial rod (102) by deformations of the ends of this rod.

22. Piston according to one of claims 19 to 21, **characterized in that** its rear part (38) has a recess (52, 106) or a blind axial passage (50) of non-circular cross section, for adjusting the angular position of the piston in the master cylinder.

## Patentansprüche

1. Verfahren zur Herstellung eines Sekundärkolbens eines Hauptzylinders eines Kraftfahrzeugbremskreises, wobei dieser Kolben (34) zylindrische Endabschnitte (36, 38), die dazu vorgesehen sind, Dichtungen (64, 66) und Federanschläge (70, 78, 92) aufzunehmen, einen zylindrischen Zwischenabschnitt (40), der mit einer Öffnung (44) ausgebildet ist, welche axial langgestreckt ist und den Kolben diametral durchquert, und ringförmige Ränder (42) aufweist, welche radial nach außen gerichtet sind und am Kolben zwischen seinen Endabschnitten und seinem Zwischenabschnitt ausgebildet sind, **dadurch gekennzeichnet, dass** es darin besteht, den Kolben durch Formen eines Kunststoffs in einer Form herzustellen, die zwei Endteile (54, 56) aufweist, wobei jeder Teil einen zylindrischen Formhohlraum mit der Form eines zylindrischen Endabschnitts (36, 38) des Kolbens und eines entsprechenden ringförmigen Rands (42) aufweist, sowie Formzwischenteile (58), zwischen denen ein Formhohlraum mit der Form des Zwischenabschnitts (40) des Kolbens und seiner langgestreckten Öffnung (44) begrenzt ist.

2. Verfahren nach Anspruch 1, **dadurch gekennzeichnet, dass** es darin besteht, den Kolben (34) durch Einspritzen von Kunststoffmaterial in die oben genannte Form zu formen.

3. Verfahren nach Anspruch 1 oder 2, **dadurch gekennzeichnet, dass** es darin besteht, den Kolben (34) durch axiale Verlagerung der Endteile (54, 56) der Form nach außen und durch radiale Verlagerung eines Zwischenteils oder der Zwischenteile (58) der Form nach außen zu entformen.

4. Verfahren nach einem der vorhergehenden Ansprüche, **dadurch gekennzeichnet, dass** es darin besteht, die Dichtungen (64, 66) am Kolben anzubringen, indem diese Dichtungen jeweils auf einen zylindrischen Endabschnitt (36, 38) des Kolbens geschoben werden, damit sie an die oben genannten ringförmigen Ränder (42) in Anlage gelangen.

5. Verfahren nach einem der vorhergehenden Ansprüche, **dadurch gekennzeichnet, dass** es darin besteht, ein Ende (38) des Kolbens durch Formen mit einer axialen Stange (90) auszubilden, welche sich entgegengesetzt zum Kolben erstreckt.

6. Verfahren nach einem der Ansprüche 1 bis 4, **dadurch gekennzeichnet, dass** es darin besteht, ein Ende (38) des Kolbens auf einen Einsatz in Form einer Stange (100) aufzuformen, welche sich axial entgegengesetzt zum Kolben erstreckt.

7. Sekundärkolben eines Hauptzylinders, der durch die Durchführung des Verfahrens nach einem der vorhergehenden Ansprüche aus Kunststoff hergestellt ist, **dadurch gekennzeichnet, dass** seine zylindrischen Endabschnitte (36, 38) keine Nähte und keine Grate der Formtrennebene aufweisen.

8. Kolben nach Anspruch 7, **dadurch gekennzeichnet, dass** er aus einem faserverstärkten Kunststoffmaterial besteht.

9. Kolben nach Anspruch 7 oder 8, **dadurch gekennzeichnet, dass** die an den ringförmigen Rändern (42) anliegenden Dichtungen (64, 66) axial durch kleine Scheiben (68, 122), die auf die zylindrischen Endabschnitte des Kolbens aufgesteckt sind, und/oder durch Federanschläge (70, 78, 92, 120) festgeklemmt sind.

10. Kolben nach Anspruch 9, **dadurch gekennzeichnet, dass** ein Federanschlag (70) in Form eines zylindrischen Halters auf einen Endabschnitt (36) des Kolbens aufgesteckt und durch am Kolben oder am zylindrischen Halter ausgebildete Rippen (88, 88a) gehalten ist.

11. Kolben nach Anspruch 10, **dadurch gekennzeichnet, dass** die Rippen (88, 88a) im Wesentlichen parallel zur Achse (62) des Kolbens verlaufen.

12. Kolben nach Anspruch 10 oder 11, **dadurch gekennzeichnet, dass** der zylindrische Halter (70) eine ringförmige Wulst (74) aufweist, die radial nach außen hervorsteht und ein Mittel zum Halten einer Windung einer Spiralfeder (22) bildet, welche auf diesen Halter aufgesteckt ist.

13. Kolben nach einem der Ansprüche 10 bis 12, **dadurch gekennzeichnet, dass** der Halter (70) an seinem zur Dichtung (64) entgegengesetzten Ende einen ringförmigen Rand (76) aufweist, der radial nach innen gerichtet ist und einen Sitz für eine Feder (26) zum Zurückstellen eines Ventilelements (24) bildet, welches in einem axialen Durchgang (48) des Kolbens angebracht ist.

14. Kolben nach einem der Ansprüche 7 bis 13, **dadurch gekennzeichnet, dass** die an einem anderen zylindrischen Endabschnitt (38) des Kolbens angebrachte Dichtung durch einen ersten ringförmigen Federanschlag (78, 92, 122) axial festgeklemmt, an die radiale Stirnfläche des Kolbens gedrückt und von einer axialen Stange (80, 100, 102, 116) durchquert ist, bei welcher das zum Kolben entgegengesetzte Ende einen zweiten Federanschlag (18) trägt, der axial gleitend an der Stange angebracht ist.

15. Kolben nach Anspruch 14, **dadurch gekennzeichnet, dass** die Stange (90, 100) durch Formen oder Aufformen mit dem Kolben (34) fest verbunden ist und dass ihr zum Kolben entgegengesetztes Ende Mittel (94, 96, 98) zur Arretierung des zweiten Federanschlags (18) aufweist, wobei diese Arretierungsmittel beispielsweise eine radiale Verformung (94) des Endes der Stange oder eine Mutter oder dergleichen aufweisen, welche auf dieses Ende geschraubt ist.

16. Kolben nach Anspruch 14, **dadurch gekennzeichnet, dass** die Stange (116) in eine axiale Bohrung (118) des entsprechenden Endes des Kolbens geschraubt ist.

17. Kolben nach Anspruch 15 oder 16, **dadurch gekennzeichnet, dass** er mit der axialen Stange (90, 100, 116), die den ersten und den zweiten Federanschlag (42, 120, 18) trägt, eine Einheitsbaugruppe bildet.

18. Kolben nach Anspruch 14, **dadurch gekennzeichnet, dass** der erste Federanschlag (78) durch Verformung, zum Beispiel durch Verstemmen, an der oben genannten axialen Stange (80) angebracht ist, bei der das kolbenseitige Ende in eine axiale Bohrung (50) des entsprechenden Endes des Kolbens geführt ist.

19. Kolben nach Anspruch 14 oder 18, **dadurch gekennzeichnet, dass** dieser Kolben (34) und die axiale Stange (80, 102), welche die Federanschläge (78, 92, 18) trägt, unabhängige Einheits-Unterbaugruppen bilden, die durch axiales Anliegen im Hauptzylinder einander zugeordnet sind.

20. Kolben nach Anspruch 19, **dadurch gekennzeichnet, dass** der Totgang des Ventilelements (24) des Sekundärkolbens (34) durch den Abstand zwischen den von der axialen Stange (80, 102) getragenen Federanschlägen (78, 92, 18) in deren Ruheposition bestimmt ist.

21. Kolben nach Anspruch 19 oder 20, **dadurch gekennzeichnet, dass** der erste und der zweite Federanschlag (92, 18) an der oben genannten axialen Stange (102) durch Verformungen der Enden dieser Stange axial gehalten sind.

22. Kolben nach einem der Ansprüche 19 bis 21, **dadurch gekennzeichnet, dass** sein hinterer Abschnitt (38) zum Einstellen der Winkelposition des Kolbens im Hauptzylinder eine Einsenkung (52, 106) oder einen axialen Sackdurchgang (50) mit nicht kreisförmigem Querschnitt aufweist.
